(19) Europäisches Patentamt
European Patent Office
Office européen des brevets

(11) Publication number: **0 218 271 A1**

(12) **EUROPEAN PATENT APPLICATION**

(21) Application number: 86201403.2

(22) Date of filing: 08.08.86

(51) Int. Cl.$^4$: **A01N 47/18** , A01N 47/12 , //(A01N47/18,39:02),(A01N47/1-2,39:02)

(30) Priority: 09.08.85 US 764158

(43) Date of publication of application: 15.04.87 Bulletin 87/16

(84) Designated Contracting States: AT BE CH DE FR GB IT LI NL SE

(71) Applicant: STAUFFER CHEMICAL COMPANY
Westport Connecticut 06881(US)

(72) Inventor: Salmon, Brian N.
6 Hawbridge, Capel St. Mary
Ipswich Suffolk 1P9 2XW(GB)

(74) Representative: Smulders, Theodorus A.H.J. et al
Vereenigde Octrooibureaux Nieuwe Parklaan 107
NL-2587 BP 's-Gravenhage(NL)

(54) **Synergistic herbicidal compositions and method.**

(57) A synergistic herbicidal composition comprising a mixture of

(a) an herbicidally effective amount of a thiolcarbamate of the formula

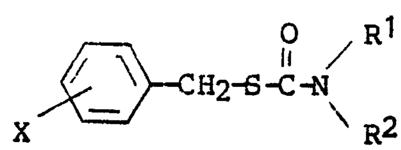

in which X is hydrogen, chlorine or bromine; and $R^1$ and $R^2$ are independently selected from the group consisting of $C_1$-$C_6$ alkyl and $C_5$-$C_7$ cycloalkyl, and -

(b) an herbicidally effective amount of a propionic acid derivative compound having the formula

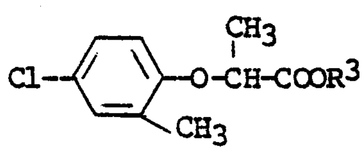

wherein $R^3$ is hydrogen or an agriculturally acceptable salt-forming cation selected from the group consisting of diethanolamine, diethylamine, dimethylamine, sodium and potassium; at a weight ratio of (a) to (b) of from about 1:1 to about 4:1.

EP 0 218 271 A1

# SYNERGISTIC HERBICIDAL COMPOSITIONS AND METHOD

## Background of the Invention

The protection of crops from weeds and other vegetation which inhibit crop growth is a constantly recurring problem in agriculture. To help combat this problem researchers in the field of synthetic chemistry have produced an extensive variety of chemicals and chemical formulations effective in the control of such unwanted growth. Chemical herbicides of many types have been disclosed in the literature and a large number are in commercial use.

In some cases, active herbicides have been shown to be more effective in combination than when applied individually. The result is often termed "synergism," since the combination demonstrates a potency or activity level exceeding that which it would be expected to have, based on a knowledge of the individeual potencies of the components. The present invention resides in the discovery that certain thiolcarbamates and certain benzene derivatives, already known individually for their herbicidal potency, display this synergism when applied in combination.

## Prior Art

The two classes of compounds forming the composition which are the subject of the present invention are independently known in the art for their effects on plant growth.

The first class, the thiolcarbamates are disclosed as herbicides in U.S. Patent Nos. 3,185,720 (Tilles et al., May 25, 1965), 3,198,786 (Tilles et al., Aug. 3, 1965), and 2,913,327 (Tilles et al., Nov. 17, 1959).

The second class of compounds forming the synergistic herbicidal compositions of the invention are propionic acid derivatives, as more particularly defined herein, and are commercially available.

## Description of the Invention

It has now been discovered that synergism in the control of undesired vegetation is exhibited by compositions comprising a mixture of the following two components:

a) an herbicidally effective amount of a thiolcarbamate of the formula

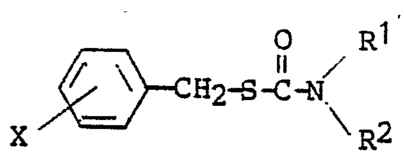

in which

X is hydrogen, chlorine or bromine; and

$R^1$ and $R^2$ are independently selected from the group consisting of $C_1$-$C_6$ alkyl and $C_5$-$C_7$ cycloalkyl, and

(b) an herbicidally effective amount of a propionic acid derivative having the formula

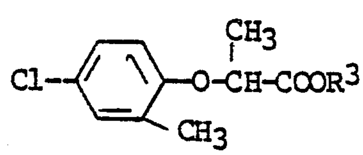

wherein $R^3$ is hydrogen or an agriculturally acceptable salt-forming cation selected from diethanolamine, diethylamine, dimethylamine, sodium or potassium.

The term "alkyl" is used herein to denote both straight-chain and branched-chain groups. Examples of alkyl groups include methyl, ethyl, n-propyl, isopropyl, n-butyl, sec-butyl, isobutyl, etc. All carbon atom ranges are inclusive of their upper and lower limits.

Examples of thiolcarbamates useful in the present invention are:

1. S-benzyl dipropylthiolcarbamate
2. S-benzyl ethyl, 1,2-dimethylpropylthiolcarbamate
3. S-(2-chlorobenzyl)-N,N-diethylthiolcarbamate
4. S-(4-chlorbenzyl)-N,N-diethylthiolcarbamate

These and other thiolcarbamates within the scope of this invention can be prepared by the procedures described in U.S. Patent Nos. 2,913,327, 3,185,720, and 3,198,786 mentioned above, and U.S. Patents 3,144,475, 2,992,091 and 3,207,775.

The preferred thiolcarbamate for use in the invention is S-benzyl dipropyl thiolcarbamate.

The preferred propionic acid derivative for use in the compositions of the invention is 2-[(4-chloro-o-tolyl)oxy]propionic acid, or agriculturally acceptable salts thereof. This compound is known commercially under the common name mecoprop.

The above mentioned, and all other derivative compounds listed herein, are commercially available.

The terms "synergism" and "synergistic" are used herein to convey the result observed when a combination of herbicides demonstrates a potency in excess of that which the combination would be expected to produce on the basis of the potencies of each herbicide applied individually.

The term "herbicide" is used herein to denote a compound which controls or modifies the growth of plants. The term "herbicidally effective amount" is used to indicate the quantity of such a compound or combination of such compounds which is capable of producing a controlling or modifying effect. Controlling or modifying effects include all deviations from natural development, for example: killing, retardation, leaf burn, dwarfing and the like. The term "plants" is used to include all post-emergent vegetation, ranging from seedlings to established vegetation.

In the composition of this invention, the thiolcarbamate:propionic acid derivative weight ratio at which the herbicidal response is synergistic lies within the range of about 1:1 to about 4:1, preferably about 1.2:1 to about 3.2:1, most preferably about 1.4:1.

Application rates will depend upon the weeds to be controlled and the degree of control desired. In general, the compositions of this invention are most efficiently employed at a rate of 0.01 to 50 pounds per acre (0.011 to 56 kilograms per hectare) of the active ingredients, preferably 0.1 to 25 pounds per acre (0.11 to 28 kilograms per hectare).

The method of this invention therefore comprises applying an herbicidally effective amount of the synergistic compositions of this invention to the locus where control is desired.

The compositions are particularly effective in controlling weed species growing among small grain plant crops such as wheat, barley, rye and the like.

The herbicidal efficacy of the compositions of this invention are demonstrated in the following example.

EXAMPLE 1

The herbicidal responses from a combined use of S-benzyl dipropylthiolcarbamate and mecoprop were studied by means of a field test.

A series of field test plots were prepared and planted with winter wheat and winter barley. The crops were allowed to grow to the 2-3 leaf stage, and then the test herbicidal compositions were applied at the rate indicated by diluting commercial formulations of the respective herbicides with water and applying at the predetermined rate. The following weed pest species were seeded along side the wheat and barley.

| | | |
|---|---|---|
| *Lolium multiflorum* | annual ryegrass | (LOLMU) |
| *Avena spp.* | wild oats | (AVESS) |
| *Galium aparine* | bedstraw | (GALAP) |
| *Viola arvenis* | field pansy | (VIOAR) |

In addition to the foregoing, the following naturally occurring weed species, which also grew up along side the wheat and barley crop plants, were sprayed with the herbicidal compositions of this invention.

| | | |
|---|---|---|
| Capsella bursa-pastoris | shepherd's purse | (CAPBP) |
| Stellaria media | common chickweed | (STEME) |
| Matricaria spp. | mayweed | (MATSS) |
| Poa annua | annual bluegrass | (POAAN) |

Water was used to dilute all the herbicide compositions. The chemical solutions were delivered to the soil or plant surfaces of the weed species by post-emergent application with a tank sprayer. Ratings were made 71 days after treatment.

Herbicide interaction responses were evaluated by use of Colby's formula, Colby, N.R., (1967), "Calculating Synergistic and Antagonistic Responses of Herbicide Combinations," Weeds, Vol. 15:20-25, and:

$$E = X + \frac{Y(100 - X)}{100}$$

where E = expected response (E)

where X = observed (O) value of percent growth control when the first herbicide is applied singly; and

where Y = observed (O) value or percent growth control when the second herbicide is applied singly.

The response or relationship interaction from a combined herbicide treatment is synergistic when an observed value is greater than an expected value. A synergistic response is understood to be one in which the interaction response is greater than the sum of responses from the individual chemical treatments. An antagonistic response is the opposite situation. A response is additive when the observed and expected response is equal.

The following table shows the averaged data and results for the tests.

TABLE I

Crop: Winter wheat (AVALON)
Winter barley (IGRI)

Applied (POES)
Crop Growth Stage: 2-3 leaf

| | | | % Weed Control | | | | | | | | | | | | | | | |
|---|---|---|---|---|---|---|---|---|---|---|---|---|---|---|---|---|---|---|
| | | | Planted Species | | | | | | | | Natural Species | | | | | | | |
| Species | | Rate | LOLMU | | AVESS | | GALAP | | VIOAR | | CAPBP | | STEME | | MATSS | | POAAN | |
| No. | Treatment | (kg ai/ha) | O | E | O | E | O | E | O | E | O | E | O | E | O | E | O | E |
| 1 | untreated | - | 0 | | 0 | | 0 | | 0 | | 0 | | 0 | | 0 | | 0 | |
| 2 | Comp. 1 | 3.0 | 97 | | 67 | | 95 | | 0 | | 99 | | 99 | | 0 | | 99 | |
| | (80% E.C.) | 4.0 | 95 | | 67 | | 95 | | 0 | | 99 | | 100 | | 20 | | 99 | |
| 3 | Comp. 1 | 3.0 + 1.25 | 93 | - | 20 | - | 100 | - | 51 | - | 100 | - | 100 | - | 97 | - | 94 | - |
| | (80% E.C.) | 3.0 + 2.50 | 93 | 97 | 23 | 77.23 | 100 | 99.95 | 80 | 46 | 100 | 100 | 100 | 100 | 99.8 | 99 | 95 | 99.13 |
| | Mecoprop | 4.0 + 1.25 | 96 | - | 46 | - | 99 | - | 47 | - | 100 | - | 100 | - | 98 | | 95 | - |
| | (60% E.C.) | 4.0 + 2.50 | 95 | 95 | 41 | 77.23 | 100 | 99.95 | 83 | 46 | 100 | 100 | 100 | 100 | 99.8 | 99.2 | 95 | 99.13 |
| | T.M. | | | | | | | | | | | | | | | | | |
| 4 | Mecoprop | 2.5 | 0 | | 31 | | 99 | | 46 | | 100 | | 100 | | 99 | | 13 | |
| | (60% E.C.) | | | | | | | | | | | | | | | | | |

Comp. 1 = S-benzyl dipropyl thiocarbamate
E.C. = Emulsifiable concentrate (diluted with water for application)
Mecoprop = 2-[(4-chloro-o-tolyl)oxy]-propionic acid, diethylamino salt
T.M. = tank mix

The compositions of the present invention show synergistic activity as herbicides in controlling the growth of undesirable vegetation when applied to such vegetation in pre-or postemergence application. Post-emergent application is preferred. The compositions are generally embodied in formulations which contain inert or occasionally active ingredients or diluent carriers in addition to the active compounds. Examples of such ingredients or carriers are water, organic solvents, surface active agents, oil, water-in-oil emulsions, wetting agents, dispersing agents, and emulsifying agents. The herbicidal formulations generally take the form of wettable powders, solutions or emulsifiable concentrates.

Wettable powders are finely divided compositions comprising a particulate carrier impregnated with the herbicidal compound and additionally containing one or more surface active agents. The surface active agent promotes rapid dispersion of the powder in aqueous medium to form stable, sprayable suspensions. A wide variety of surface active agents can be used, for example, long chain fatty alcohols and alkali metal salts of the sulfated fatty alcohols; salts of sulfonic acid; esters of long chain fatty acids; and polyhydric alcohols, in which the alcohol groups are free, omega-substitued polyethylene glycols of relatively long chain length.

The herbicidal compositions can also be applied to the foliage in the form of a solution in a suitable solvent. Solvents frequently used in herbicidal formulations include kerosene, fuel oil, xylene, petroleum fractions with boiling ranges above xylene, and aromatic petroleum fractions rich in methylated naphthalenes.

The most preferred formulations are emulsifiable concentrates which consist of an oil solution of the herbicide along with an emulsifying agent. Prior to use the concentrate is diluted with water to form a suspended emulsion of oil droplets. The emulsifiers used are usually a mixture of anionic and nonionic surfactants. Other additives such as spreading agents and stickers can be included in the emulsifiable concentrate.

The formulations described above can be applied to the vegetation sought to be controlled in any conventional manner either before or after the vegetation has emerged from the soil. The vegetation can be in any stage of development after emergence, ranging from seedlings to fully grown plants. Application can be achieved by any conventional technique such as the use of ground spraying equipment or aircraft-mounted sprayers. Various other application techniques will be apparent to one skilled in the pesticide art.

## Claims

1. A synergistic herbicidal composition comprising a mixture of

(a) an herbicidally effective amount of a thiolcarbamate of the formula

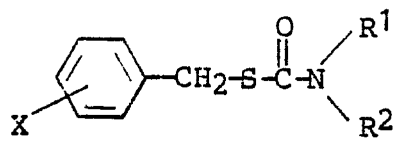

in which

X is hydrogen, chlorine or bromine; and

$R^1$ and $R^2$ are independently selected from the group consisting of $C_1$-$C_6$ alkyl and $C_5$-$C_7$ cycloalkyl, and

(b) an herbicidally effective amount of a propionic acid derivative compound having the formula

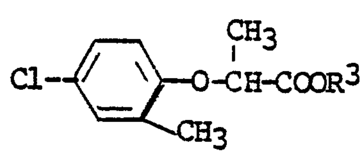

wherein $R^3$ is hydrogen or an agriculturally acceptable salt-forming cation selected from the group consisting of diethanolamine, diethylamine, dimethylamine, sodium or potassium; at a weight ratio of (a) to (b) of form about 1:1 to about 4:1.

2. The composition of Claim 1 wherein (a) is S-benzyl dipropyl thiolcarbamate and (b) is 2-[(4-chloro-o-tolyl)oxy] propionic acid, dimethylamine salt.

3. The composition of Claim 1 wherein (a) is S-benzyl ethyl, 1,2-dimethylpropyl thiolcarbamate and (b) is 2-[(4-chloro-o-tolyl)oxy] propionic acid, dimethylamine salt.

4. The composition of Claim 1 wherein (a) is S-(2-chlorobenzyl)-N,N-diethyl thiolcarbamate and - (b) is 2-[(4-chloro-o-tolyl)oxy] propionic acid, dimethylamine salt.

5. A method of controlling undesirable vegetation which comprises the pre-emergence application or postemergence application to said vegetation of a herbicidal composition comprising a mixture of

(a) an herbicidally effective amount of a thiolcarbamate of the formula

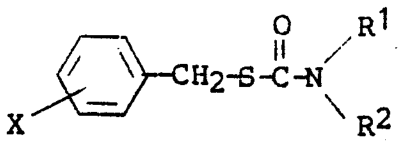

in which

X is hydrogen, chlorine or bromine; and

$R^1$ and $R^2$ are independently selected from the group consisting of $C_1$-$C_6$ alkyl and $C_5$-$C_7$ cycloalkyl, and

(b) an herbicidally effective amount of a propionic acid derivative compound having the formula

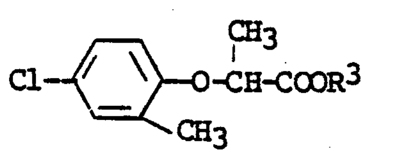

wherein $R^3$ is hydrogen or an agriculturally acceptable salt-forming cation selected from the group consisting of diethanolamine, diethylamine, dimethylamine, sodium and potassium; at a weight ratio of (a) to (b) of form about 1:1 to about 4:1.

6. The method of Claim 5 wherein (a) is S-benzyl dipropyl thiolcarbamate and (b) is 2-[(4-chloro-o-tolyl)oxy] propionic acid, dimethylamine salt.

7. The method of Claim 5 wherein (a) is S-benzyl ethyl, 1,2-dimethylpropyl thiolcarbamate and (b) is 2-[(4-chloro-o-tolyl)oxy] propionic acid, dimethylamine salt.

8. The method of Claim 5 wherein (a) is S-(2-chlorobenzyl)-N,N-diethyl thiolcarbamate and (b) is 2-[(4-chloro-o-tolyl]oxy propionic acid, dimethylamine salt.

European Patent Office

# EUROPEAN SEARCH REPORT

Application number

EP 86 20 1403

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A-1 301 613 (KUMIAI CHEMICAL INDUSTRY)<br>* Claims *<br>--- | 1-8 | A 01 N 47/18<br>A 01 N 47/12 //<br>(A 01 N 47/18<br>A 01 N 39:02 )<br>(A 01 N 47/12<br>A 01 N 39:02 ) |
| A | FR-A-1 416 184 (STAUFFER CHEMICAL CO.)<br>* Examples; claims *<br>--- | 1-8 | |
| A | DE-A-2 717 376 (CELAMERCK)<br>* Claims *<br>----- | 1-8 | |

TECHNICAL FIELDS SEARCHED (Int. Cl.4)

A 01 N

The present search report has been drawn up for all claims

| Place of search | Date of completion of the search | Examiner |
|---|---|---|
| THE HAGUE | 27-11-1986 | FLETCHER A.S. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82